Europäisches Patentamt

European Patent Office

Office européen des brevets

(11) Numéro de publication: **0 423 046 A1**

# (12) DEMANDE DE BREVET EUROPEEN

(21) Numéro de dépôt: 90420440.1

(22) Date de dépôt: 11.10.90

(51) Int. Cl.⁵: **A47J 29/06**, B65D 85/32

(30) Priorité: 12.10.89 FR 8913639

(43) Date de publication de la demande:
17.04.91 Bulletin 91/16

(84) Etats contractants désignés:
AT BE CH DE DK ES GB GR IT LI LU NL SE

(71) Demandeur: Le Quilliec, Georges
23, avenue Théophile Gautier
F-75016 Paris(FR)

Demandeur: Michel, André
4, place Général de Gaulle
F-22170 Chatelaudren(FR)

Demandeur: Petit, Jean-Pierre
69, rue Villebonne
F-22950 Tregueux(FR)

Demandeur: Petit, Yolène
69, rue Villebonne
F-22950 Tregueux(FR)

(72) Inventeur: Le Quilliec, Georges
23, avenue Théophile Gautier
F-75016 Paris(FR)
Inventeur: Michel, André
4, place Général de Gaulle
F-22170 Chatelaudren(FR)
Inventeur: Petit, Jean-Pierre
69, rue Villebonne
F-22950 Tregueux(FR)
Inventeur: Petit, Yolène
69, rue Villebonne
F-22950 Tregueux(FR)

(74) Mandataire: Perrier, Jean-Pierre et al
Cabinet GERMAIN & MAUREAU 12 rue de la
République
F-42000 St-Etienne(FR)

(54) Conditionnement pour oeufs formant ustensile de cuisson.

(57) L'invention est relative à un conditionnement pour oeufs formant ustensile de cuisson du type composé d'un socle 2 comportant des alvéoles et d'un couvercle.

Selon l'invention, son socle 2 est réalisé dans une matière non déformable à température d'ébullition de l'eau, et est composé de plusieurs éléments unitaires 4a, 4b, 4c, 4d délimitant chacun une alvéole, tandis que chacun 4a de ces éléments, d'une part, est formé par des nervures 6 espacées angulairement, délimitant l'alvéole et reliant une bague inférieure 5 à une collerette supérieure 7, d'autre part, est solidaire d'un manche latéral 9 saillant verticalement au dessus de la collerette 7 et dépassant du sommet de l'oeuf 8 correspondant pour former moyen de préhension et, de plus, est relié aux éléments juxtaposés 4b, 4c, 4d par des zones sécables 10 et 12 ménagées sur sa collerette 7 et sur les bords 12 de son manche, et que la protubérance 14 formée par la juxtaposition des manches 9 des éléments unitaires constitue organe de positionnement d'une ouverture 13 ménagée dans la paroi supérieure du couvercle 3.

FIG.4

## CONDITIONNEMENT POUR OEUFS FORMANT USTENSILE DE CUISSON.

La cuisson des oeufs s'effectue en les déposant dans un récipient contenant de l'eau portée à ébullition et pendant un temps qui dépend de la cuisson recherchée, à savoir de l'ordre de trois minutes pour les oeufs dits "à la coque", et de l'ordre de dix minutes pour les oeufs dits "durs".

Traditionnellement, les oeufs sont introduits dans le récipient et extraits de ce récipient au moyen d'une cuillère à soupe. Durant la cuisson, l'ébullition de l'eau met les oeufs en mouvement c'est à dire leur communique des mouvements dans tous les sens et en particulier dans le sens vertical. Dans ces conditions, les oeufs se soulèvent puis retombent sur le fond du récipient, de manière répétée, ce qui peut provoquer, pour des oeufs présentant des fragilités de coquille, des fêlures de coquille permettant au contenu de l'oeuf de s'échapper dans le récipient. Cet échappement de matière est sans effet sur la qualité gustative du produit final, mais il forme à la périphérie de l'oeuf une excroissance qui altère l'aspect esthétique final de cet oeuf, et cela de manière suffisante pour en engendrer le rebut s'il s'agit d'un oeuf dur pour la restauration collective.

L'un des objets de l'invention est de fournir un moyen de cuisson permettant de remédier à cet inconvénient.

Par ailleurs, la plupart des oeufs sont commercialsiés par 6, 12 ou plus dans des conditionnements qui, assurant leur protection aux chocs, sont composés d'un socle comportant plusieurs alvéoles de réception des oeufs et d'un couvercle d'immobilisation. Pour procéder à la cuisson, il est indispensable d'extraire les oeufs du conditionnement et de les déposer dans le récipient, ce qui exige des manipulations délicates pour ne pas briser l'un des oeufs.

La présente invention a pour but de remédier à ces divers inconvénients en fournissant un conditionnement de protection des oeufs supprimant toute manipulation de ceux-ci dans la phase préparatoire à leur cuisson, et constituant également ustensile de cuisson et de préhension après cuisson.

A cet effet, dans le conditionnement selon l'invention, du type composé d'un socle et d'un couvercle, le socle est réalisé dans une matière non déformable à la température d'ébullition de l'eau et est composé de plusieurs éléments unitaires délimitant chacun une alvéole, tandis que chacun de ces éléments, d'une part, est formé par des nervures espacées délimitant l'alvéole de réception de l'oeuf et reliant une bague inférieure à une collerette supérieure, d'autre part, est solidaire d'un manche latéral saillant verticalement au-dessus de la collerette et dépassant du sommet de l'oeuf correspondant pour former moyen de préhension et, de plus, est relié aux éléments juxtaposés par des zones sécables ménagées sur sa collerette et sur les bords de son manche, et que la protubérance formée par la juxtaposition des manches des éléments unitaires constitue organe de positionnement d'une ouverture ménagée dans la paroi supérieure du couvercle.

Un tel conditionnement assure une excellente protection des oeufs et peut être directement déposé dans un récipient ou extrait de ce récipient en le saisissant par la partie de l'excroissance dépassant de son couvercle. Cette façon de procéder supprime toute manipulation et tout risque de casse des oeufs portés par les alvéoles du conditionnement tout en simplifiant le travail du cuisinier.

De plus, lors de la cuisson, les oeufs positionnés dans les alvéoles du conditionnement ne s'en échappent pas et ne risquent pas de se briser en favorisant l'échappement du blanc de l'oeuf, ce qui garantit la régularité de la cuisson et la qualité esthétique du produit final.

Un ou plusieurs des éléments unitaires du conditionnement peuvent être séparés du reste du conditionnement avant cuisson, si la quantité d'oeufs demandée est inférieure à la quantité disposée dans ce conditionnement.

D'autres caractéristiques et avantages ressortiront de la description qui suit en référence au dessin schématique annexé représentant à titre d'exemples non limitatifs une forme d'exécution de ce conditionnement dans le cas de son application à la protection de quatre oeufs.

Figures 1 et 2 sont des vues respectivement de côté en élévation et en plan par dessus d'un élément unitaire du conditionnement,

Figures 3 et 4 sont des vues en perspective du conditionnement, respectivement avec et sans son couvercle,

Figure 5 est une vue de côté en coupe transversale montrant un élément du conditionnement lorsqu'il est utilisé pour la cuisson d'un oeuf.

De façon connue, le conditionnement est composé d'un socle et d'un couvercle désignés respectivement par les références 2 et 3 (figure 3).

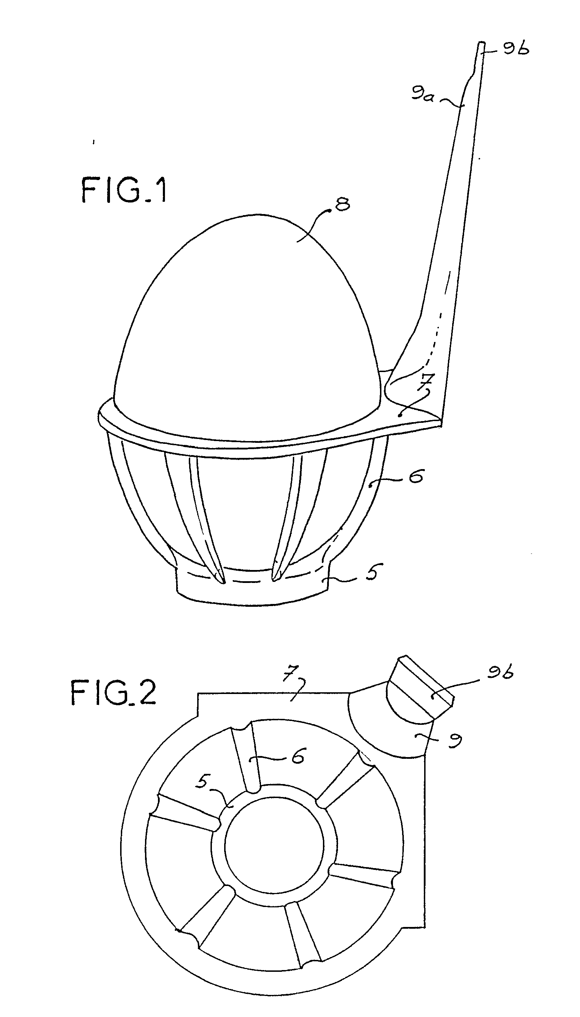

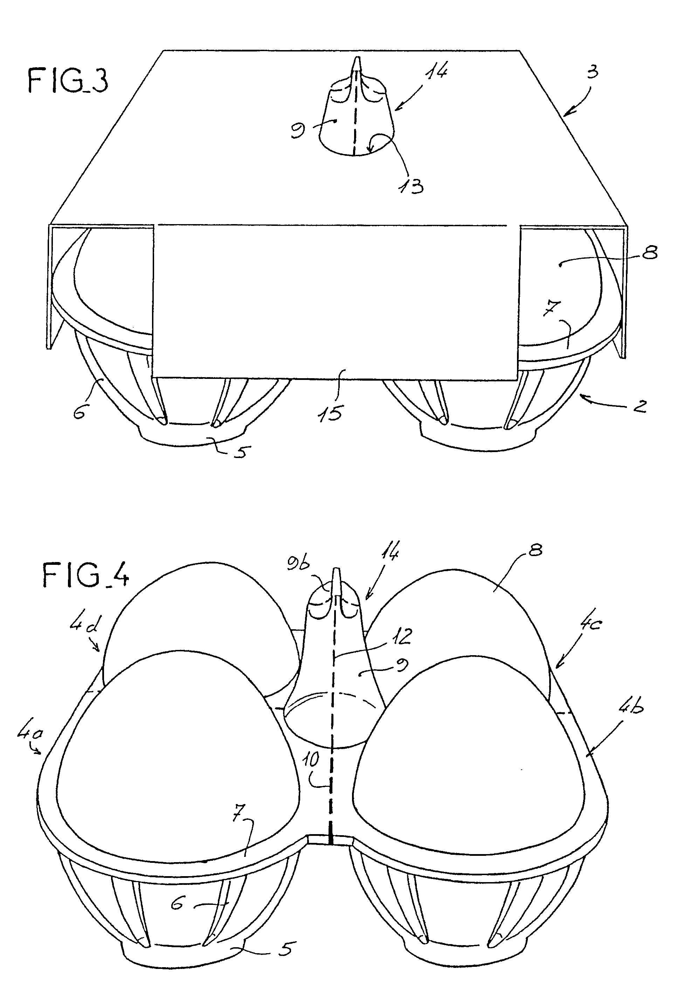

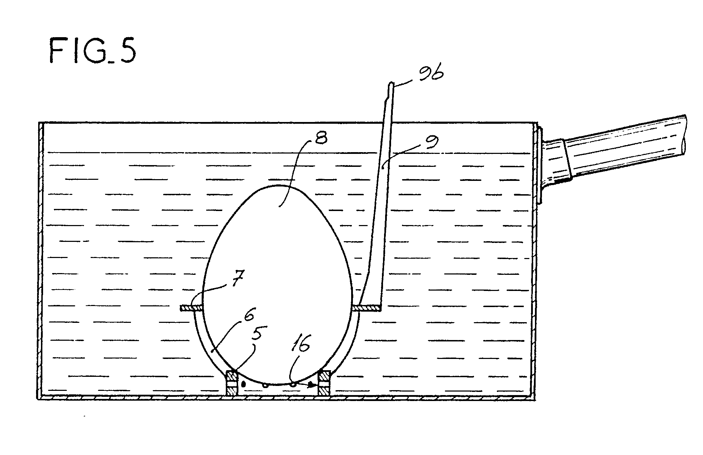

Selon l'invention, le socle 3 est composé, dans cette forme d'exécution, de quatre éléments unitaires, respectivement 4a, 4b, 4c, 4d à la figure 4. Comme le montrent les figures 1 et 2, chacun de ces éléments unitaires est lui-même composé d'une bague inférieure d'appui 5, de nervures 6, périphériques et espacées angulairement et d'une collerette supérieure 7.

Les nervures 6, qui sont cintrées dans cette forme d'exécution, assurent la liaison de l'anneau inférieur 5 avec la collerette 7 et délimitent ainsi une alvéole apte à positionner et recevoir un oeuf désigné de façon générale par 8 aux figures. La collerette 7 est munie latéralement d'un manche 9 saillant verticalement vers le haut et dont l'extrémité 9a dépasse du sommet de l'oeuf. Comme le montre plus en détails la figure 2, à son extrémité libre supérieure, le manche 9 est muni d'une nervure 9b constituant moyen de préhension.

Comme le montre la figure 4, les différents éléments unitaires sont reliées les uns aux autres par leurs collerettes 7 et manches 9. Cette liaison est assurée par des zones sécables, disposées en 10 entre deux collerettes juxtaposées ou en 12 entre les bords des manches juxtaposés. Ces zones sécables peuvent être constituées par des zones de plus faible épaisseur ou par des zones comportant des pointillés favorisant la rupture de la matière constitutive du socle. Il faut ici noter que cette matière est bien entendu choisie parmi celles ne se déformant pas à une température voisine de la température d'ébullition de l'eau, telles que certaines matières synthétiques, ou tôle métallique du type utilisée pour réaliser des conditionnements métalliques tels que boîte de bière.

Après fabrication, les différents éléments du socle reçoivent les oeufs 8, puis le socle est associé à un couvercle 3 réalisé en carton ou en matière synthétique.

Une forme d'exécution de ce couvercle est représentée à la figure 3. Comme le montre cette figure, la paroi supérieure du couvercle repose sur les sommets des oeufs 8 et comporte dans sa partie centrale une ouverture 13 de laquelle dépasse la protubérance 14 formée par la juxtaposition des différents manches 9. Cette protubérance, qui fait saillie du couvercle, permet la préhension de l'ensemble du conditionnement grâce à la nervure formée par la juxtaposition des éléments de nervure 9b.

On conçoit aisément que, pour procéder à la cuisson des oeufs, il n'est pas indispensable de les sortir du conditionnement et qu'il suffit de saisir le conditionnement par la protubérance 14 pour le déposer directement dans un récipient rempli d'eau bouillante comme montré à la figure 5. Après cuisson, l'extraction des oeufs de la casserole d'eau chaude peut être effectuée aisément en saisissant la protubérance dont l'extrémité dépasse du niveau d'eau chaude. Cette opération de cuisson peut être effectuée avec ou sans couvercle 3, bien qu'il soit avantageux que le couvercle 3 soit maintenu pour éviter tout déplacement vertical des oeufs sous l'action de l'eau bouillonnant dans le récipient.

La paroi supérieure du couvercle 3 est rendue solidaire de la protubérance 14 par collage ou par encliquetage du bord 13 de son ouverture dans une gorge circulaire ménagée dans cette protubérance. Ses parois latérales 15 sont libres ou fixées par collage contre les collerettes 7.

La figure 5 met en évidence que, pour éviter que le bouillonnement tende à chasser chacun des oeufs de son alvéoles, la partie intérieure de la bague inférieure 5 de chaque alvéole communique avec l'extérieur de cette bague par des canaux radiaux 16. Dans cette forme d'exécution, les canaux sont constitués par des perçages réalisés dans la bague mais il est évident qu'ils peuvent aussi être constitués par une denture ménagée sur la face inférieure de cette bague.

La figure 5 met aussi en évidence que, si besoin est, l'utilisateur ne peut procéder à la cuisson que d'un seul oeuf en sectionnant un élément de socle par rapport au socle proprement dit, en utilisant les lignes de moindre résistance 10 et 12.

Un tel conditionnement présente de nombreux avantages tant au niveau du cuisinier d'un restaurant collectif puisqu'il évite de nombreuses manipulations, qu'auprès de la ménagère qui dispose, avec le conditionnement, de tous les éléments pour procéder à la cuisson d'un ou plusieurs oeufs, sans avoir à procéder à des manipulations et à des recherches d'ustensile divers. Les oeufs ne sont absolument pas manipulés entre leur mise en place dans le conditionnement et leur dégustation, dégustation qui peut s'effectuer d'ailleurs dans l'élément unitaire du conditionnement formant ainsi coquetier.

Après utilisation pour cuisson et dégustation, chacun des éléments du conditionnement peut être jeté, puisqu' il est refourni avec un nouveau conditionnement contenant des oeufs frais non cuits.

Il est évident que l'invention ne se limite pas à un conditionnement pouvant recevoir quatre oeufs comme décrit mais qu'il peut aussi, dans des variantes, recevoir de deux à six oeufs, et être seul ou lié à un ou plusieurs conditionnements identiques par des zones sécables.

**Revendications**

1. Conditionnement pour oeufs formant ustensile de cuisson du type composé d'un socle 2 comportant des alvéoles et d'un couvercle 3, caractérisé en ce que son socle 2 est réalisé dans une matière non déformable à température d'ébullition de l'eau, et est composé de plusieurs éléments unitaires 4a, 4b, 4c, 4d délimitant chacun une alvéole, tandis que chacun 4a de ces éléments, d'une part, est formé par des nervures 6 espacées angulairement, délimitant l'alvéole et reliant une bague inférieure 5 à une collerette supérieure 7, d'autre part, est solidaire d'un manche latéral 9 saillant verticalement au dessus de la collerette 7 et dépassant du sommet de l'oeuf 8 correspondant pour former moyen de préhension et,de plus, est relié aux éléments juxtaposés 4b, 4c, 4d par des zones sécables 10 et 12 ménagées sur sa collerette 7 et sur les bords 12 de son manche, et que la protubérance 14 formée par la juxtaposition des manches 9 des éléments unitaires constitue organe de positionnement d'une ouverture 13 ménagée dans la paroi supérieure du couvercle 3.

2. Conditionnement selon la revendication 1, caractérisé en ce que la protubérance 14 formée par la juxtaposition des manches 9 des éléments unitaires 4a, 4b, 4c, 4d est munie d'une gorge de verrouillage apte à coopérer avec le bord 13 de l'ouverture de la paroi supérieure du couvercle 3.

3. Conditionnement selon l'une quelconque des revendications 1 et 2, caractérisé en ce que, la protubérance 14 formée par la juxtaposition des manches 9 des éléments unitaires 4a, 4b, 4c, 4d est munie à son extrémité libre supérieure d'une nervure de préhension 9b.

4. Conditionnement selon l'une quelconque des revendications 1 à 3, caractérisé en ce que la bague inférieure 5 de chaque élément unitaire 4a, 4b, 4c, 4d est traversé par des canaux radiaux 16.

# FIG.1

# FIG.2

FIG.3

FIG.4

# FIG.5

# RAPPORT DE RECHERCHE EUROPEENNE

Numéro de la demande

**EP 90 42 0440**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 130 179   (HEATON) <br> * page 1, lignes 59 - 97; figures 1, 3 * <br> — — — | 1 | A 47 J <br> 29/06 <br> B 65 D 85/32 |
| A | DE-A-2 924 909   (BOSCH-SIEMENS) <br> * page 6, lignes 4 - 20; figures 1, 2 * <br> — — — | 1 | |
| A | FR-A-2 589 438   (ALPHANORM) <br> * figures 1-3 * <br> — — — | 2 | |
| A | FR-A-2 517 948   (SANDRAS) <br> * le document en entier * <br> — — — | 1 | |
| A | GB-A-1 115 293   (WARNER) <br> — — — | | |
| A | GB-A-6 224 30   (SAWTELL) <br> — — — | | |
| A | US-A-2 029 535   (LANGEL) <br> — — — — | | |

| | DOMAINES TECHNIQUES RECHERCHES (Int. Cl.5) |
|---|---|
| | A 47 J <br> B 65 D |

**Le présent rapport de recherche a été établi pour toutes les revendications**

| Lieu de la recherche | Date d'achèvement de la recherche | Examinateur |
|---|---|---|
| La Haye | 04 janvier 91 | SCHARTZ J. |